# EUROPÄISCHE PATENTSCHRIFT

(11) **EP 1 608 907 B1**
(45) Veröffentlichungstag und Bekanntmachung des Hinweises auf die Patenterteilung: **27.09.2006**
(21) Anmeldenummer: 04725612.8
(22) Anmeldetag: 03.04.2004
(51) Int. Cl.: F21S 8/10, B60Q 1/14, F21V 19/00, F21V 5/00

(54) **BELEUCHTUNGSEINHEIT FÜR KRAFTFAHRZEUGE**
LIGHTING UNIT FOR MOTOR VEHICLES
UNITE D' ECLAIRAGE POUR VEHICULES

(30) Priorität: 03.04.2003 DE 10315133
(43) Veröffentlichungstag der Anmeldung: 28.12.2005
(73) Patentinhaber: Hella KGaA Hueck & Co., 59552 Lippstadt (DE)
(72) Erfinder: EICHHORN, Karsten, 59320 Ennigerloh (DE); HAGEDORN, Susanne, 59558 Lippstadt (DE)
(86) Internationale Anmeldenummer: PCT/EP2004/003566
(87) Internationale Veröffentlichungsnummer: WO 2004/088202

(56) Entgegenhaltungen:
- DE-A- 3 148 843
- DE-A- 10 205 779
- DE-C- 10 005 795
- GB-A- 2 139 340

## Beschreibung

Die Erfindung betrifft eine Beleuchtungseinheit für Fahrzeuge mit einer Mehrzahl von in einem Gitter verteilt angeordneten Halbleiterlichtquellen, dass das Gitter von Halbleiterlichtquellen in mindestens zwei Gittersegmente aufgeteilt ist, wobei die Gittersegmente jeweils unabhängig voneinander ansteuerbar und/oder einer unterschiedlichen Lichtfunktion zugeordnet sind, mit einem Optikelement im Strahlengang eines von den Halbleiterlichtquellen ausgesandten Lichtbündels.

Aus der DE 100 09 782 A1 ist eine Beleuchtungseinheit für Kraftfahrzeuge bekannt, die als Lichtquelle eine Mehrzahl von in einem Gitter angeordnete Halbleiterlichtquellen aufweist. Das Gitter von Halbleiterlichterquellen ist in Gittersegmente aufgeteilt, wobei den jeweils unterschiedlich ansteuerbaren Gittersegmenten eine unterschiedliche Lichtfunktion zugeordnet werden kann. Das von den Gittersegmenten abgestrahlte Lichtbündel wird mittels einer in Lichtausbreitungsrichtung vorgelagerten Linse entsprechend einer vorgegebenen Lichtverteilung abgebildet. Zwischen dem Gitter von Hableiterlichtquellen und der Linse ist eine Blende angeordnet, so dass die bekannte Beleuchtungseinheit auf Basis des Projektionsprinzips arbeitet.

Dokument GB-A-2139340 offenbart eine Beleuchtungseinheit für Fahrzeuge mit einer Mehrzahl von Halbleiterlichtquellen die von einer lichttransparenten Abdeckung abgedeckt sind und die in eine Gitter angeordnet sind; das Gitter ist in zwei unabhängig voneinander ansteuerbare Gittersegmente aufgeteilt.

Nachteilig an der bekannten Beleuchtungseinheit ist, dass die Gitter bzw. Gittersegmente eine relativ große zweidimensionale Ausdehnung haben, da jede Halbleiterlichtquelle über ein eigenes Gehäuse verfügt. Darüber hinaus ist es stets erforderlich, dass zwischen dem Gitter von Halbleiterlichtquellen und der Linse eine Blende angeordnet ist.

Aufgabe der vorliegenden Erfindung ist es, eine Beleuchtungseinheit für Kraftfahrzeuge derart weiterzubilden, dass die Beleuchtungseinheit kompakter und platzsparender aufgebaut ist.

Zur Lösung dieser Aufgabe ist die Erfindung in Verbindung mit dem Oberbegriff des Patentanspruchs 1 dadurch gekennzeichnet, dass die Halbleiterlichtquellen auf einem gemeinsamen Trägersubstrat angeordnet sind mit einer in Lichtausbreitungsrichtung lichttransparenten Chipabdeckung, dass die Chipabdeckung mit einem lichtstreuenden und/oder lichtkonvertierenden Zusatzmaterial gefüllt ist und das ein Abschatter vorgesehen ist, derart, dass in dem Grenzbereich zwischen dem angesteuerten Gittersegment und dem nicht angesteuerten Gittersegment ein relativ steiler Lichtstärkeübergang einstellbar ist zur Bildung einer Hell-Dunkel-Grenze.

Der besondere Vorteil der Erfindung besteht darin, dass durch die konzentrierte Anordnung der Halbleiterlichtquellen auf einem gemeinsamen Trägersubstrat und die damit verbundene hohe Packungsdichte der Halbleiterlichtquellen die Leuchtdichte der Lichtquelle wesentlich erhöht werden kann. Herstellungstechnisch einfach können die einzelnen Halbleiterlichtquellen als Chips auf einem gemeinsamen Trägersubstrat angeordnet sein. Eine gemeinsame lichttransparente Chipabdeckung und ein in dasselbe integrierte lichtstreuende und/oder lichtkonvertierende Zusatzmittel bewirken eine homogen leuchtende Lichtaustrittsfläche. Vorteilhaft ergibt sich nach der Erfindung eine räumlich konzentrierte Lichtquelle mit einer relativ großen Leuchtdichte. Ein Abschatter bewirkt einen relativ steilen Lichtstärkeübergang in einem Grenzbereich zwischen einem von einer Steuereinheit angesteuerten ersten Gittersegment und einem von der Steuereinheit nicht angesteuerten zweiten Gittersegment. Hierdurch kann eine relativ scharfe Hell-Dunkel-Grenze verwirklicht werden. Die Gittersegmente können beispielsweise zur Bildung eines Abblendlichtes und eines Fernlichtes angesteuert werden.

Nach einer Weiterbildung der Erfindung ist der Abschatter als eine im Grenzbereich zwischen dem ersten Gittersegment und dem zweiten Gittersegment angeordnete Trennwand ausgebildet, wobei das freie Ende der Trennwand zu einer Vorderseite der Chipabdeckung derart beabstandet ist, dass zwischen den benachbarten Gittersegmenten eine geringe lichttechnische Wechselwirkung besteht. Die Lichtfunktionen der einzelnen Gittersegmente werden nur geringfügig von einem Streulicht des benachbarten Gittersegmentes gestört. Die Ausbildung des Abschatters als Trennwand ermöglicht eine eindeutige Festlegung der gegenseitigen lichttechnischen Beeinflussung benachbarter Gittersegmente bereits bei der Herstellung der Lichtquelle.

Vorteilhaft ragt die Trennwand derart von dem Trägersubstrat ab, dass bei gleichzeitiger Ansteuerung benachbarter Gittersegmente die Bildung eines schwarzen Striches auf einem Messschirm verhindert wird.

Nach einer Weiterbildung der Erfindung sind die Halbleiterlichtquellen jeweils als Chips ausgebildet, wobei die Chips auf einem gemeinsamen Trägersubstrat angeordnet sind. Hierdurch kann eine Mehrzahl von Halbleiterlichtquellen platzsparend und miniaturisierend gebildet werden.

Nach einer Weiterbildung der Erfindung sind auf der Vorderseite der Chipabdeckung Optikelemente klebend angeordnet und auf die entsprechenden Chips abgestimmt. Hierdurch ist eine gezielte Lichtführung unmittelbar an der Lichtaustrittsfläche der Lichtquelle ermöglicht.

Zwei Ausführungsbeispiele der Erfindung wird nachfolgend anhand der Zeichnungen näher erläutert.

Es zeigen:
- Figur 1:: ein schematischer Querschnitt durch eine Beleuchtungseinheit,
- Figur 2:: eine Draufsicht auf ein Gitter von Halbleiterlichtquellen,
- Figur 3:: einen vergrößerten Querschnitt durch eine Beleuchtungseinheit gemäß einer zweiten Ausführungsform und
- Figur 4:: eine auf einen Messschirm projizierte Beleuchtungsstärkeverteilung der Beleuchtungseinheit in einem Grenzbereich zwischen einem angesteuerten ersten Gittersegment und einem nicht angesteuerten zweiten Gittersegment.

Eine Beleuchtungseinheit für Fahrzeuge, insbesondere Kraftfahrzeuge, besteht im wesentlichen aus einer Lichtquelle 1 und einem Optikelement 2, das das von der Lichtquelle 1 abgestrahlte Lichtbündel direkt entsprechend einer vorgegebenen Lichtverteilung abbildet.

Die erfindungsgemäße Beleuchtungseinheit kann beispielsweise als Scheinwerfer zur Erzeugung einer Abblendlicht-, Fernlicht-, Autobahnlicht- und/oder Kurvenlichtfunktion dienen.

Die Lichtquelle 1 wird gebildet aus einer Mehrzahl von Halbleiterlichtquellen 3, insbesondere LED-Lichtquellen (lichtemittierende Dioden), die nach Art eines Gitters 4 auf einem gemeinsamen Trägersubstrat 5 angeordnet sind.

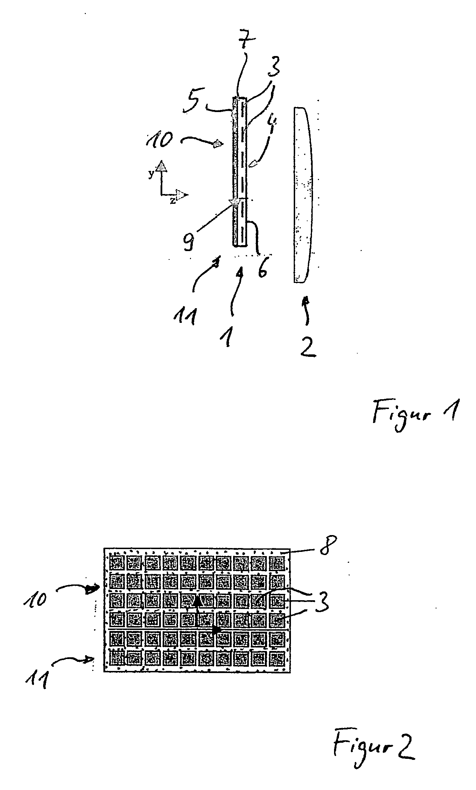

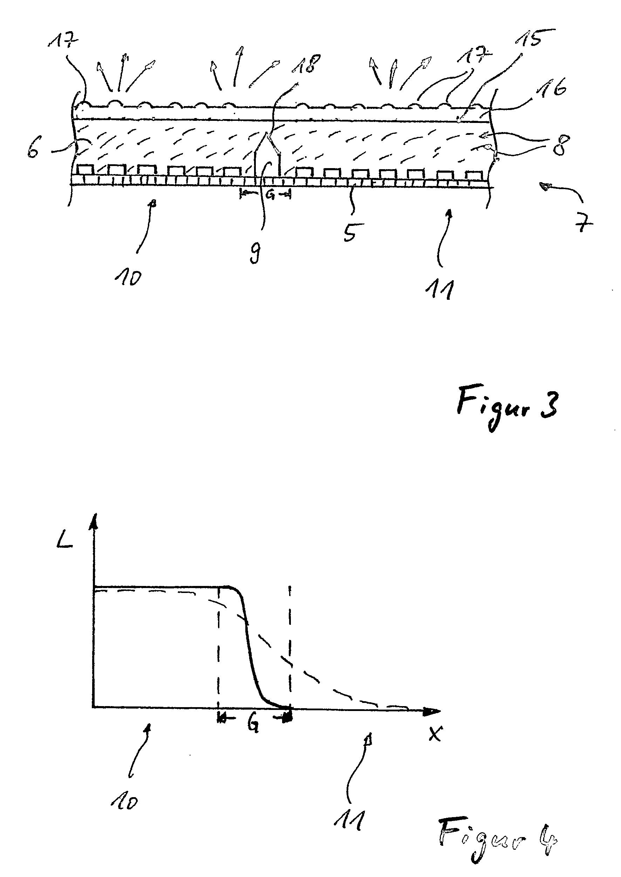

Wie aus Figur 2 zu ersehen ist, sind die Halbleiterlichtquellen 3 regelmäßig neben- und untereinander angeordnet. Die Halbleiterlichtquellen 3 sind als sogenannte Chips ausgebildet, die auf einem gemeinsamen Trägersubstrat 5 aufgebracht sind.

Wie sich aus Figur 1 ergibt, sind die Chips 3 auf einer der Trägersubstrat 5 abgewandten Seite mit einer gemeinsamen lichttransparenten Chipabdeckung 6 versehen. Die Chipabdeckung 6 sowie das Trägersubstrat 5 bilden ein Gehäuse 7, das die Halbleiterlichtquellen 3 vollständig umschließt. Die Chipabdeckung 6 ist als ein flächiger Vergusskörper ausgebildet, der nach dem Bestücken des Trägersubstrats 5 mit dem Chip 3 aufgebracht wird.

Der Vergusskörper 6 weist ein lichtstreuendes und/oder lichtkonvertierendes Zusatzmaterial 8, insbesondere ein Leuchtstoff auf. Das Zusatzmaterial 8 bewirkt, dass weißes Licht von einer Vorderseite 15 der Chipabdeckung 6 in Lichtausbreitungsrichtung abgestrahlt wird. Das Zusatzmaterial 8 ist gleichmäßig in dem Vergusskörper 6 verteilt angeordnet.

In dem Ausführungsbeispiel gemäß Figur 3 ist ein Optikelement 16 als Primäroptikelement (Linse) unmittelbar auf der Vorderseite 15 des Vergusskörpers 6 durch Verklebung anliegend ausgebildet. Das Primäroptikelement weist eine Mehrzahl von Linsenelementen 17 auf, die jeweils in bezug auf den Chip 3 ausgerichtet sind. Das Primäroptikelement 16 ist einstückig aus einem Kunststoffmaterial hergestellt und auf der Vorderseite 15 des Vergusskörpers 6 mit demselben durch Verklebung verbunden.

Das Gitter 4 von Halbleiterlichtquellen 3 ist mittels eines Abschatters 9 in ein oberes Gittersegment 10 und in ein unteres Gittersegment 11 aufgeteilt. Das obere Gittersegment 10 dient zur Erzeugung einer Abblendlichtfunktion. Das untere Gittersegment 11 dient zur Erzeugung einer Fernlichtfunktion. Es wird zur Erzeugung des Fernlichtes mittels einer nicht dargestellten Steuereinheit zu dem oberen Gittersegment 10 hinzugeschaltet, so dass alle Halbleiterlichtquellen 3 des Gitters 4 im Einsatz befindlich sind.

Der Abschatter 9 ist als Trennwand ausgebildet, die sich senkrecht zur Erstreckung des Trägersubstrat 5 zwischen demselben und der Gehäuseabdeckung 6 erstreckt. Die Trennwand 9 bewirkt eine vollkommene lichttechnische Trennung der beiden Gittersegmente 10 und 11. Die Trennwand 9 bewirkt insbesondere, dass bei alleiniger Ansteuerung eines Gittersegmentes 10 oder 11 kein Randstreifen oder ein reduzierter Randstreifen entlang der Trennwand 9 des anderen Gittersegmentes 11 oder 10 mitleuchtet. Ein solches Mitleuchten könnte durch das Zusatzmaterial 8 bewirkt werden, das sich im benachbarten Gittersegment 10 oder 11 befindet. Vorteilhaft lässt sich hierdurch eine scharfe Hell-Dunkel-Grenze bilden.

Ein freies Ende der Trennwand 9 ist verjüngend als eine Spitze 18 ausgebildet und beabstandet zu der Vorderseite 15 des Vergusskörpers 6 angeordnet. Hierdurch wird gewährleistet, dass bei gleichzeitiger Ansteuerung des ersten und des zweiten Gittersegmentes 10 und 11 kein störender dunkler Streifen durch den Grenzbereich derselben projiziert wird. Damit wird ein homogener Lichtübergang im Grenzbereich zwischen den Gittersegmenten 10 und 11 erzielt zur Bildung des Fernlichtes. Darüber hinaus kann alternativ ein zweites Gittersegment ein Kurvenlicht oder ein Autobahnlicht homogen zum Abblendlicht aufgeschaltet werden.

Das Trägersubstrat 5 bildet zusammen mit den gitterförmig angeordneten Halbleiterlichtquellen 3 ein Halbleiterlichtquellen-Array. Hierdurch lässt sich eine konzentrierte und platzsparende Lichtquelle erzeugen, die gegebenenfalls auf einfache Art und Weise unterschiedlich angesteuerte Gittersegmente aufweist. Vorteilhaft lässt sich hierdurch eine Miniaturisierung einer Lichtquelle erzeugen, die auf herstellungstechnisch einfache Weise eine Variabilität in der Anwendung von Lichtfunktionen verbessert. Zum einen kann das Array eine vorgegebene Form aufweisen, die abhängig ist von der erforderlichen Leuchtstärke, Lichtfunktion oder der Form der Karosserieöffnung des Fahrzeugs. Dies kann durch entsprechendes Zuschneiden des Chipwafers erfolgen.

Zum anderen können die Chips 3 selbst auch eine an die Erfordernisse angepasste Form aufweisen. Beispielsweise können die Chips 3 dreieckförmig oder wabenförmig ausgebildet sein, so dass der Knick der 15°-Hell-Dunkel-Grenze besser nachgebildet werden kann bzw. die Packungsdichte größer ist.

Durch die Erstreckung des Abschatters 9 lässt sich eine vorgegebene Hell-Dunkel-Grenze erzeugen. Einzelne Gruppen von Halbleiterlichtquellen 3 können zur Bildung von Basislicht, asymetrischen Licht oder anderen Lichtanteilen zusammengefasst sein.

Vorteilhaft kann das Trägersubstrat 5 auch die Ansteuerschaltung für die Halbleiterlichtquellen 3 enthalten. Die Steuereinheit kann beispielsweise als integrierte Schaltung ausgebildet sein.

Das Trägersubstrat 5 kann aus einem elektrisch leitenden, insbesondere Kupfer, oder einem nicht leitenden Material, insbesondere Keramikmaterial oder einem Kunststoffmaterial ausgebildet sein. Das Trägersubstrat 5 dient als Träger der lichttechnischen Bauteile bzw. passiver oder aktiver Bauelemente und zur Stromführung. Die Chips 3 sind in Bondtechnik mit entsprechenden Anschlussstellen des Trägersubstrats 5 verbunden und durch die Vergussfläche 6 vollständig abgedeckt.

Zu diesem Zweck sind auf dem Trägersubstrat 5 elektrisch leitende Leiterbahnen angeordnet.

Die Lichtquelle 1 nach dem Ausführungsbeispiel gemäß Figur 1 ist in einer Brennebene der Linse 2 (Sekundäroptikelement) angeordnet, so dass das von der Lichtquelle 1, 3 ausgesandte Lichtbündel ausschließlich durch die Formgebung der Linse 2 entsprechend einer vorgegebenen Lichtverteilung abgebildet wird.

In Figur 4 ist die Beleuchtungsstärkeverteilung L über den Weg x dargestellt, der sich auf einem Messschirm ergibt, wenn lediglich das erste Gittersegment 10 angesteuert wird zur Bildung einer Abblendlichtfunktion. Die Beleuchtungsstärkeverteilung ist gemäß der durchgezogenen Linie dargestellt, wobei in einem Grenzbereich G zwischen dem ersten Gittersegment 10 und dem zweiten Gittersegment 11 sich ein großer Gradient der Beleuchtungsstärkeverteilung ergibt. Dies wird erzielt durch den Abschatter 9, der in diesem Grenzbereich G angeordnet ist. Hierdurch lässt sich eine scharfe Hell-Dunkel-Grenze erzielen.

Im Vergleich dazu ist die Beleuchtungsstärkeverteilung ohne das Vorhandensein eines Abschatters 9 im Grenzbereich G dargestellt (gestrichelte Linie). Durch den kontinuierlichen und stetigen Übergang dieser Beleuchtungsstärkeverteilung von dem ersten Gittersegment 10 zu dem zweiten Gittersegment 11 kann keine scharfe Hell-Dunkel-Grenze erzielt werden.

## Patentansprüche

1. Beleuchtungseinheit für Fahrzeuge mit einer Mehrzahl von in einem Gitter verteilt angeordneten Halbleiterlichtquellen, wobei das Gitter von Halbleiterlichtquellen in mindestens zwei Gittersegmente aufgeteilt ist, die jeweils unabhängig voneinander ansteuerbar und/oder einer unterschiedlichen Lichtfunktion zugeordnet sind, mit einem Optikelement im Strahlengang eines von den Halbleiterlichtquellen ausgesandten Lichtbündels, **dadurch gekennzeichnet, dass** die Halbleiterlichtquellen (3) auf einem gemeinsamen Trägersubstrat (5) angeordnet sind mit einer in Lichtausbreitungsrichtung lichttransparenten Chipabdeckung (6), dass die Chipabdeckung (6) mit einem lichtstreuenden und/oder lichtkonvertierenden Zusatzmaterial (8) gefüllt ist, und dass ein Abschatter (9) vorgesehen ist, derart, dass in dem Grenzbereich zwischen dem angesteuerten Gittersegment (10) und dem nicht angesteuerten Gittersegment (11) ein relativ steiler Lichtstärkeübergang einstellbar ist zur Bildung einer Hell-Dunkel-Grenze.

2. Beleuchtungseinheit nach Anspruch 1, **dadurch gekennzeichnet, dass** der Abschatter (9) im Grenzbereich zwischen dem ersten Gittersegment (10) und dem zweiten Gittersegment (11) angeordnet ist.

3. Beleuchtungseinheit nach Anspruch 1 oder 2, **dadurch gekennzeichnet, dass** der Abschatter (9) als eine die zwei Gittersegmente (10, 11) voneinander trennende Trennwand ausgebildet ist, die von dem Trägersubstrat (5) in Lichtausbreitungsrichtung abragt.

4. Beleuchtungseinheit nach Anspruch 3, **dadurch gekennzeichnet, dass** sich die Trennwand (9) senkrecht zu dem Trägersubstrat (5) erstreckt und dass das freie Ende der Trennwand (9) beabstandet und/oder verjüngend zulaufend zu einer Vorderseite (15) der Chipabdeckung (6) angeordnet ist.

5. Beleuchtungseinheit nach einem der Ansprüche 1 bis 4, **dadurch gekennzeichnet, dass** die Halbleiterlichtquellen (3) der Gittersegmente (10, 11) als eine Mehrzahl von UV-Strahlung emittierende und/oder blaues Licht emittierende Chips ausgebildet sind und in Form eines Halbleiterlichtquellen-Arrays angeordnet sind.

6. Beleuchtungseinheit nach Anspruch 5, **dadurch gekennzeichnet, dass** das Halbleiterlichtquellen-Array (4) in einer Brennebene des Optikelementes (2, 16) angeordnet ist.

7. Beleuchtungseinheit nach einem der Ansprüche 1 bis 6, **dadurch gekennzeichnet, dass** die Trennwand (9) eine zur Ausbildung einer Hell-Dunkel-Grenze entsprechende Längserstreckung in Richtung des Verlaufs des Trägersubstrats (5) aufweist.

8. Beleuchtungseinheit nach einem der Ansprüche 1 bis 7, **dadurch gekennzeichnet, dass** das Zusatzmaterial (8) als ein Lichtkonverter, insbesondere durch einen Leuchtstoff, gebildet ist.

9. Beleuchtungseinheit nach einem der Ansprüche 1 bis 8, **dadurch gekennzeichnet, dass** das Trägersubstrat (5) eben oder gekrümmt ausgebildet ist.

10. Beleuchtungseinheit nach einem der Ansprüche 1 bis 9, **dadurch gekennzeichnet, dass** auf der dem Trägersubstrat (5) abgewandten Vorderseite (15) der Chipabdeckung (6) ein Optikelement (16) unmittelbar auf der Chipabdeckung (6) anliegend angeordnet ist.

## Claims

1. A lighting unit for vehicles comprising a plurality of semiconductor light sources arranged so as to be distributed in a grid, the grid of semiconductor light sources being divided into at least two grid segments which can each be activated independently of the other and/or are associated with a different lighting function, as well as comprising an optical element in the path of a light beam emitted by the semiconductor light sources, **characterized in that** the semiconductor light sources (3) are disposed on a common carrier substrate (5) with a chip covering (6) which is transparent in direction of the radiation of light, **in that** the chip covering (6) is filled with a light-diffusing and/or light-converting additional material (8), **and in that** a screen (9) is provided in such a way that, in the region of the boundary between the activated segment (10) of the grid and the non-activated segment (11) of the grid, a relatively steep light-intensity transition can be adjusted to form a light-dark boundary.

2. A lighting unit according to Claim 1, **characterized in that** the screen (9) is disposed in the region of the boundary between the first grid segment (10) and the second grid segment (11).

3. A lighting unit according to Claim 1 or 2, **characterized in that** the screen (9) is formed as a partition wall separating the two grid segments (10, 11) from one another, said partition wall projecting from the carrier substrate (5) in direction of the radiation of light.

4. A lighting unit according to Claim 3, **characterized in that** the partition wall (9) extends perpendicular to the carrier substrate (5) and **in that** the free end of the partition wall (9) is disposed at a distance from a front side (15) of the chip covering (6) and/or extends towards it in such a way as to taper off to a point.

5. A lighting unit according to one of Claims 1 to 4, **characterized in that** the semiconductor light sources (3) of the grid segments (10, 11) are formed as a plurality of UV-radiation-emitting and/or blue-light-emitting chips and are provided in the form of a semiconductor light-source array.

6. A lighting unit according to Claim 5, **characterized in that** the semiconductor light-source array (4) is disposed in a focal plane of the optical element (2, 16).

7. A lighting unit according to one of Claims 1 to 6, **characterized in that** the partition wall (9) has an appropriate longitudinal dimension in direction of the course of the carrier substrate (5) for the formation of a light-dark boundary.

8. A lighting unit according to one of Claims 1 to 7, **characterized in that** the additional material (8) is formed as a light converter, particularly by a fluorescent substance.

9. A lighting unit according to one of Claims 1 to 8, **characterized in that** the carrier substrate (5) is formed so as to be flat or curved.

10. A lighting unit according to one of Claims 1 to 9, **characterized in that**, on the front side (15) of the chip covering (6) facing away from the carrier substrate (5), an optical element (16) is disposed in such a way as to be in direct contact with the chip covering (6).

## Revendications

1. Unité d'éclairage pour véhicules avec une pluralité de sources lumineuses semi-conductrices réparties dans une grille, la grille de sources lumineuses semi-conductrices étant subdivisée en au moins deux segments de grille, lesquels peuvent être commandés indépendamment l'un de l'autre et/ou sont affectés chacun à une fonction lumineuse différente, avec un élément optique sur la trajectoire des rayons d'un faisceau lumineux émis par les sources lumineuses semi-conductrices, **caractérisée en ce que** les sources lumineuses semi-conductrices (3) sont disposées sur un substrat de support (5) commun avec un couvercle de puce (6) transparent à la lumière dans la direction de propagation lumineuse, **en ce que** le couvercle de puce (6) est rempli d'un matériau additif (8) diffusant et/ou convertissant la lumière, et **en ce qu'**un élément d'obturation (9) est prévu de manière à pouvoir régler une transition d'intensité lumineuse relativement abrupte dans la zone limite entre le segment de grille commandé (10) et le segment de grille non commandé (11), pour la formation d'une limite de clair-obscur.

2. Unité d'éclairage selon la revendication 1,
**caractérisée en ce que** l'élément d'obturation (9) est disposé dans la zone limite entre le premier segment de grille (10) et le deuxième segment de grille (11).

3. Unité d'éclairage selon la revendication 1 ou 2, **caractérisée en ce que** l'élément d'obturation (9) est réalisé comme une cloison de séparation des deux segments de grille (10, 11) entre eux, laquelle s'élève du substrat de support (5) dans la direction de propagation lumineuse.

4. Unité d'éclairage selon la revendication 3, **caractérisée en ce que** la cloison (9) s'étend perpendiculairement au substrat de support (5) et **en ce que** l'extrémité libre de la cloison (9) est disposée à intervalle d'une face antérieure (15) du couvercle de puce (6) et/ou va en se rétrécissant vers celle-ci.

5. Unité d'éclairage selon l'une des revendications 1 à 4, **caractérisée en ce que** les sources lumineuses semi-conductrices (3) des segments de grille (10, 11) sont réalisées comme une pluralité de puces émettrices de rayonnement UV et/ou de lumière bleue, et disposées sous la forme d'un réseau de sources lumineuses semi-conductrices.

6. Unité d'éclairage selon la revendication 5, **caractérisée en ce que** le réseau de sources lumineuses semi-conductrices (4) est disposé sur un plan focal de l'élément optique (2, 16).

7. Unité d'éclairage selon l'une des revendications 1 à 6, **caractérisée en ce que** la cloison (9) présente pour la formation d'une limite de clair-obscur une extension en longueur correspondante dans la direction d'extension du substrat de support (5).

8. Unité d'éclairage selon l'une des revendications 1 à 7, **caractérisée en ce que** le matériau additif (8) est réalisé comme un convertisseur lumineux, notamment au moyen d'une substance luminescente.

9. Unité d'éclairage selon l'une des revendications 1 à 8, **caractérisée en ce que** le substrat de support (5) est plan ou voûté.

10. Unité d'éclairage selon l'une des revendications 1 à 9, **caractérisée en ce que** sur la face antérieure (15) du couvercle de puce (6) éloignée du substrat de support (5), un élément optique (16) est directement disposé sur le couvercle de puce (6).
